# EUROPEAN PATENT APPLICATION

(11) **EP 3 772 235 A1**
(43) Date of publication of application: **03.02.2021**
(21) Application number: 19460038.3
(22) Date of filing: 29.07.2019
(51) Int. Cl.: H05B 45/12, H05B 47/13, F21S 8/08

(54) **CONTROL SYSTEM INTEGRATED WITH A SOLAR LIGHTING FICTURE**

(71) Applicant: EMSI Ewa Sekula, 01-494 Warszawa (PL)
(72) Inventor: Sekula, Ewa, 01-494 Warszawa (PL)
(74) Representative: Korbela, Anna

(57) **Abstract**

The invention relates to the control system integrated with a solar lighting fixture consisting of two power sources and containing at least one photovoltaic panel (2) and at least one - attached to the bottom of the photovoltaic panel (2), connected to the LED power supply - printed circuit board with LEDs (5), in which the LEDs (5) are activated and deactivated with a signal transmitted by the microprocessor controller (4).

The microprocessor controller receiving signals from the elements of the system and sending signals to those elements (4), i.e. constituting it power supply controller (4a) and fixture controller (4b) continuously controls, processes and sends signals resulting from the synchronization of information:
- from light-sensitive twilight sensor 8, that is, the underlying message about the necessity to activate LED panels with LEDs 5,
- about battery 3 charging level, when a signal is recorded that the battery charging level is too low, then microprocessor controller 4 switches the lighting fixture to supply power to LEDs 5 from an external power supply network,
- about the operation of LEDs 5 which are placed on the printed circuit board in the fixture (*"shine"* or *"do not shine"*), this information is confronted with subsequent messages,
- about the voltage of photovoltaic panel 2 basing on which microprocessor controller 4 reads, whether the LED 5 panel is not damaged, and if so, then by radio or by wire sends the information about the need of manual intervention and the need to repair the device to the centre,
- with the signal from motion sensor 6 that activates or at least intensifies the luminous flux.

## Description

The subject matter of the invention is a control system integrated with a solar lighting fixture designed especially for the purpose of lighting all kinds of communication routes, pedestrian crossings, cycle paths, streets, roads, pavements as well as the surrounding environment of residential and service buildings and facilities that require special supervision, for example, car parks, warehouses and storage sites, sports and recreational facilities, as well as the facades of buildings.

Reducing the amount of electricity consumed for lighting of requiring it places is extremely important, not only due to the reduction in the lighting cost, but also due to the reduction in the energy consumption and reduction in the scale of CO₂ emissions.

There are many known solutions related to street lamps and lighting fixtures, which are equipped with energy-efficient light sources, e.g. LEDs, or those additionally powered by solar energy in order to reduce the cost of their operation.

Thus, i.e. from the description of the Polish invention patent number PL216114 there is a solution known, which was filed for protection on 23 November 2009, entitled "Street lamp with light emitting diodes". It describes a street lamp that contains a housing body with a holding fixture. Light panels are fitted to the body by means of heatsinks extracting the heat from the bottom of each light panel. They are sections of a flat, closed-section profile. The essence of this solution is also the fact that the light panel is mounted to the lower surface of the above-mentioned heatsink that contains the air inlet at one end and the air outlet at the other end. The air inlet and outlet into and out of the interior of the heatsink are in the form of slits. The air outlet is formed in the plane which is opposite the heatsink, above this panel. The light panel and the heatsink are set diagonally in relation to the surface to be illuminated. The described invention provides only for the use of the mains supply.

Whereas, from the description of the Polish invention number P.411855 there is a solution known, which was filed for protection on 1 April 2015, entitled "Energy-efficient street lighting system". The subject matter of the invention, shown in the figure, is an energy-efficient street lighting system, which uses individual LED fixtures installed in lighting points, with twilight sensors used for turning the lighting on and off. It is characterised in that it includes at least one source of light. Each individual fixture has two LED panels, one of which is activated and deactivated with a signal transmitted by the twilight sensor, and the other, with a signal from the motion sensor set in the direct and close surroundings of the lamp equipped with such a fixture. The motion sensor is a radar sensor emitting microwave radiation as a radar wave and analysing microwave reflections from moving objects that appear in the sensor performance field within 360 degrees and in the distance up to 15 meters from the place it is installed.

There is also a solution known which is described in the Chinese patent application for an invention no. CN104421755 (A) with priority of 28 August 2013, entitled *"Intelligent LED street lamp and control method for LED street lamps".* The described invention presents intelligent LED street lamp, which includes:
- control unit,
- light control unit,
- infrared detection unit,
- dimming light unit and,
- LED light unit, where the LED light unit is placed underneath the LED street lamp shade.

The infrared detection unit contains pyroelectric sensors placed in the lower parts of the LED street lamp posts in many adjacent sections of the road and the sensor control unit electrically connected to pyroelectric sensors. The light control unit is placed above the street lamp shade and includes the power supply unit, namely, a light-sensitive sensor unit which is placed above the street lamp shade and the control execution unit, where the power supply unit is properly connected to the light-sensitive sensor and the control execution unit. An intelligent LED street lamp can automatically monitor the change of brightness of the ambient light, traffic intensity and vehicle speed. It acquires data on ambient light and traffic conditions from sensors, and then, after processing the data, controls the intensity of the LED street lamps lighting. The described *"Intelligent LED street lamp and control method for LED street lamps"* is powered by an external electric power network.

Whereas, from the Chinese patent application for an invention number CN109185812 (A) with priority of 12 October 2018 there is a solution known titled *"Renewable energy integrated power generation street lamp".* The invention discloses a renewable energy integrated power generation street lamp containing a mounting base where the mounting screws are placed in the mounting base. The upper end of the mounting base is equipped with a street lamp pole stabilizer and the rod supporting the street lamp is positioned on the seat stabilizing the street lamp post. The street lamp has a wind energy generation module in the form of a windmill generating the wind power. The operation of the generator is transformed into electricity. To prevent a shortage of electricity at night or when it is prevented by rainy weather, the street lamp is equipped with a solar power generation module in the form of a photovoltaic panel, that is a charging board known as PV, which generates electricity. The electricity produced with PV boards is later stored in the energy storage device, which guarantees that the light energy supply is provided to street lamps at night and the mains supply is not needed. The described street lamp is energy-efficient and protects the environment. Owing to the positioning of the electro-hydraulic control stick it is possible to change the angle and direction of loading of the PV board depending on the change of the intensity and angle of incidence of the light, thus it is possible to improve the effectiveness of charging. Due to the fact that the energy supplied in this solution is supplied by the wind or solar power generation module, but does not provide for the use of the mains supply - therefore, there is a risk that the street lamp described here may stop working.

Known lamps and lighting fixtures, including those using the photovoltaic cells, are equipped with batteries of a considerable size. Hence, the big size of lamps or lighting fixtures, which are powered by a solar panel and a windmill.

The needed power energy is also usually cumulated in batteries of a considerable size, and after discharging the battery, the lamp does not light up. Of course, there is a possibility of using even larger panels and batteries to ensure a longer lighting time-however, they are not aesthetic, do not always fit in and not always there is a possibility of installing them at a scheduled place.

The purpose of this invention is to develop a control system integrated with a solar lighting fixture, which can be small and will not interfere with the spatial arrangement of the place where it is situated, but will meet the standards necessary for proper lighting of the required space and will reliably emit light at the scheduled time, regardless of the amount of stored energy by a photovoltaic cell and, regardless of the level of charging the battery, which collects a variable amount of energy depending on weather conditions.

This result was achieved by developing a control system integrated with solar lighting fixture consisting of two power sources and containing at least one photovoltaic panel and at least one - attached to the bottom of the photovoltaic panel, connected to the LED power supply unit - printed circuit panel with LEDs, in which LEDs are switched on and off with a signal transmitted by a microprocessor controller receiving signals from the elements of the system and sending signals to those elements. One of the power sources of a solar lighting fixture is at least one battery. The control system receives signals from at least one sensor, namely, the twilight sensor positioned in the solar lighting fixture.

The essence of the developed control system integrated with a solar lighting fixture lies in the fact that the LEDs power supply is supplied to them from a battery charged by a photovoltaic panel or from external power supply network. The power supply is always, e.g. in both cases, provided by means of the switch which is controlled by the control system placed inside the solar fixture which controls, processes and sends signals resulting from the synchronization of information. The control system means a microprocessor control responding to signals received from all elements of the system and controlling the power supply.

Preferably, the microprocessor controller has two dedicated controllers, e.g. the power supply controller and the fixture controller.

Typically, the motion sensor is plugged in the panel with LEDs by means of the microprocessor controller.

Typically, the battery is placed under the lighting fixture.

But, it can be also placed inside a lighting fixture under the photovoltaic panel.

The value of the developed control system integrated with a solar lighting fixture lies in the fact that, depending on the needs, the solar lighting fixture is powered by a battery or by external power supply network, and thus always provides the required level of lighting as well as safety and comfort.

The system integrated with a solar lighting fixture is equipped with all elements needed for the production and collection of the energy needed to power the LEDs emitting the light in the dark (after dark, and in the case of cloudy weather), when they are powered by the battery.

The developed system also enables a continuous lighting of the photovoltaic fixture despite the absence of appropriate voltage on the supply battery and thus always reliably illuminates the surroundings at the required and established time.

The set purpose of the invention was met successfully despite a relatively small size of the developed device.

The control system integrated with a solar lighting fixture made use of a small rechargeable battery/batteries. However, they have sufficient capacity to supply the LEDs for a long time when the microprocessor controller (receiving impulses from the twilight sensor, motion sensor and battery) sets the switch activating the LEDs in the position *"shine".*

Owing to the fact that the overall dimensions of the developed photovoltaic lighting fixture controlled by the developed system are small - it is not only aesthetic, but it is also not vulnerable to destruction by wind gusts.

Owing to the use of photovoltaic cells and planning the operation of the microprocessor controller-the control system integrated with a solar lighting fixture, basing on its total reliability, provides continuous lighting of scheduled places at the scheduled time and in ultra-economic conditions.

The subject matter of this invention was presented closer in the example of implementation in the drawings in which:

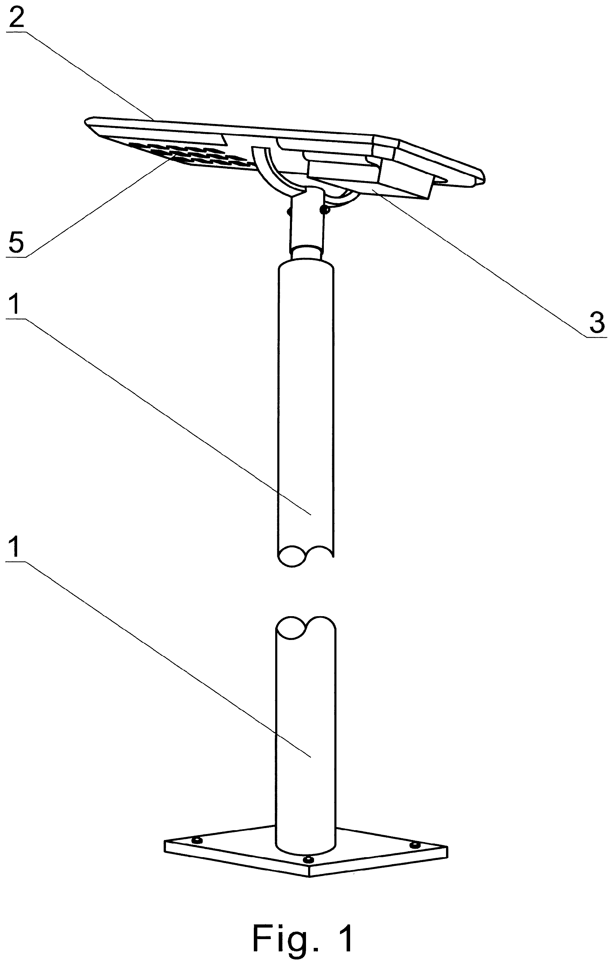

fig.1 - shows the lamp post, on which the solar lighting fixture integrated with the control system was placed,

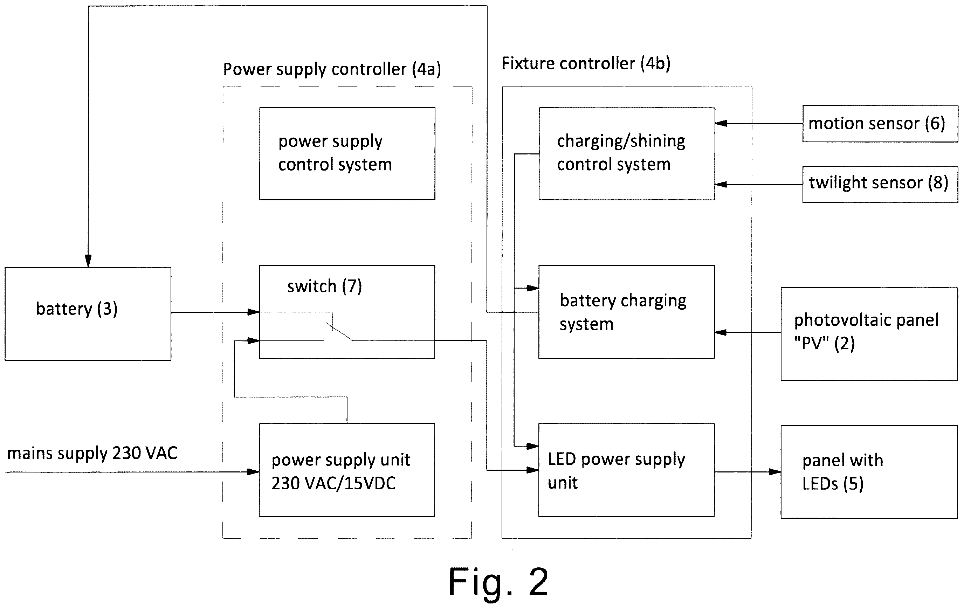

fig.2 - shows the block diagram of the control system integrated with a solar lighting fixture in the double controller version,

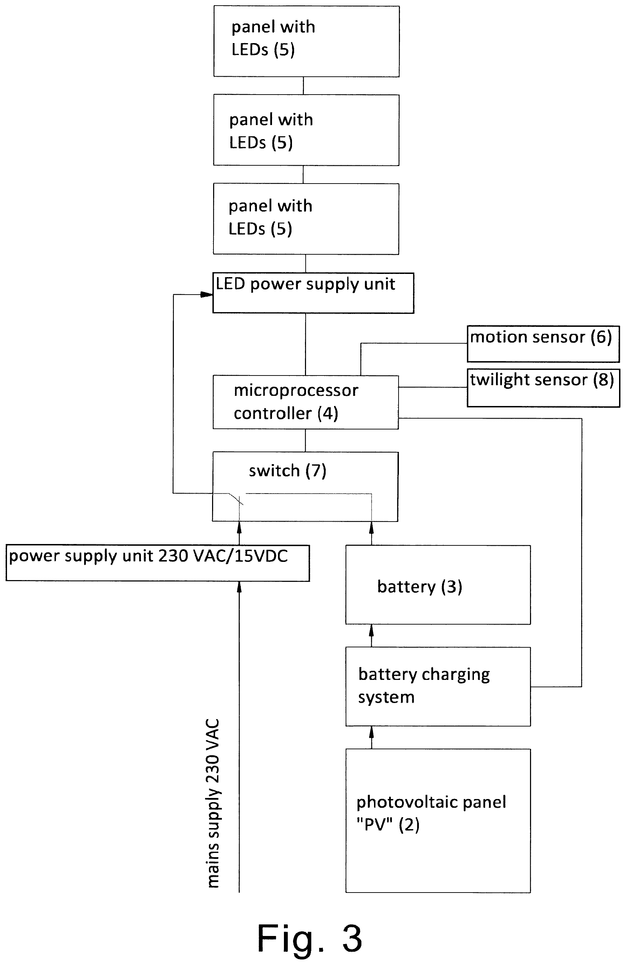

fig.3 - shows the block diagram of the control system integrated with a solar lighting fixture in a single controller version.

As it was shown in the figures, lamp post 1 constitutes an element to which the lighting fixture integrated with the control system is usually mounted, wherein it can be also mounted to any structural element, e.g. the wall, bridge, etc. Photovoltaic panel 2 called "PV panel" was placed on the lighting fixture body. The proportion of these elements (in the case of the use of lamp post 1), i.e. lamp post 1 and photovoltaic panel 2 was chosen so that the entire construction feels light. It is so due to the fact that the longer side of the photovoltaic panel 2 constitutes a maximum of 1/5 height of lamp post 1.

Preferably, directly under photovoltaic panel 2, at least one, usually lithium-ion, battery 3 is placed, which stores the electricity produced by photovoltaic cells of photovoltaic panel 2. Herein, battery 3 can be placed under the lighting fixture or inside the lighting fixture.

Herein, battery 3 can be also placed in the added element of lamp post 1 or in a special compartment in lamp post 1.

The control unit responsible for the operation of the developed system is a kind of a dual control module, in the form of multi-functional microprocessor 4 (usually placed inside the fixture body). Microprocessor controller 4 fulfils various functions that can be performed by two dedicated controllers:
- Power supply controller 4a and
- Fixture controller 4b.

After the dusk, and as a result of the impulse generated by microprocessor controller 4 (and more specifically by the fixture controller 4b), which receives signals from the described below devices - electricity (from the selected source: from the external power supply network or from battery 3) is supplied to LEDs 5, which are arranged under photovoltaic panel 2 on the printed circuit board.

There is at least one light emitting panel which contains the printed circuit board with light emitting LEDs embedded in the board, which is fixed to the lighting fixture body.

LEDs board 5 is connected to the LED power supply unit. The light-emitting surface of the light panel is placed facedown.

Photovoltaic panel 2, which is attached to the fixture body, is also a part of the lighting fixture housing.

This solution usually makes use of constant current LEDs which emit white light.

Known, energy-efficient lighting systems make use of radar detectors that emit microwave radiation as a radar wave and analyse the reflection of the microwave from moving objects that appear in the operation field of the sensor.

The developed solar lighting fixture controlled by a control system which is integrated with it, is equipped with this type or another type of known motion sensor 6, which is connected to the charging/shining system in the fixture controller 4b.

Motion sensor 6 is also equipped with a panel lighting time regulator with LEDs 5 which is activated with a signal from motion sensor 6, which keeps LEDs 5 in the position *"shine"* or *"shine more intensely"* at a scheduled time for i.e. from 10 seconds to 30 minutes after the disappearance of a moving object within the range of motion sensor 6.

Then, LEDs 5 emit the light of a desired luminous flux, while the higher luminous flux of LEDs 5 is obtained as a result of an impulse provided by motion sensor 6 which has a known and selected construction.

In general, activating the lighting fixture and setting power switch 7 is induced by twilight sensor 8.

After dark and at low levels of natural lighting, a relevant signal from twilight sensor 8 is received by the charging/shining control system in fixture controller 4b. After dark, the fixture is activated and turns on LEDs and implements the task *"shine".*

Twilight sensor 8 is placed in the body of the solar lighting fixture, similarly to other sensors which provide information to microprocessor controller 4, and more specifically, to a part that fulfils this function, i.e. the microprocessor fixture controller 4b.

Wherein, twilight sensor 8 is an essential part of the developed solution, whereas the other enrich the sensor unit, enable more efficient operation of the developed solution and reduce the level of energy consumption.

Possibly, motion sensor 6 which was used, becomes one of the essential elements of the developed control system, as it provides additional savings resulting from the reduction of the intensity of the luminous flux of the lighting fixture when no move is registered. Then, the solar lighting fixture is switched into an energy-saving *"standby"* or shining function emiting a smaller luminous flux depending on the signal passed by programmed microprocessor controller 4, and more specifically, to microprocessor fixture controller 4b.

A dedicated *firmware* that controls the operation of microcontrollers is responsible for the operation of the control system.

In the situation when the battery 3 voltage drops below a certain, established level, i.e. below the voltage of 14.9 V then, by means of switch 7 the described control system switches the solar lighting fixture power from the battery voltage (solar energy) to the mains voltage (with the power supply unit that changes the alternating current voltage, i.e. 230V AC-> to 15V DC voltage).

Switch 7 is selected from among the existing in the market solutions or is specially designed for the needs of the developed solution and constitutes the executive unit of microprocessor controller 4, and more precisely of power supply controller 4a.

Switch 7 remains in a specific position, i.e. remains enabled until the lighting fixture carries out the task *"shine".*

When the daylight starts and there is no need for the lighting fixture to shine, power supply controller 4a passes the impulse to switch 7, which turns off the power from the external power supply network (or turns off the power from battery 3, depending on the source from which the energy was collected). When the daylight starts, also the automatic charging of battery 3 starts and the energy from solar panel i.e. from photovoltaic panel 2 is cumulated.

During this time, the lighting fixture is set to *"get energy from battery 3"* position. Where this feature is blocked by fixture controller 4b which is caused by blocking impulses transmitted by twilight sensor 8, which is placed in the solar lighting fixture.

If during the day battery 3 is charged enough, then, after dark, and as a result of the impulse provided by twilight sensor 8 connected to fixture controller 4b, the lighting fixture is turned on in a battery mode.

When the amount of this energy is insufficient, the fixture operates in mode of supply from external power supply network. This situation continues until dawn, when twilight sensor 8 passes a signal that causes disabling of the lighting fixture.

During the day, battery 3 is re-charged. In the evening, when twilight sensor 8 passes the signal about the necessity to enable the lighting fixture, the fixture is powered by battery 3.

And again, when the intensity of natural light is enough, the lighting fixture goes out, even though photovoltaic panel 2 starts to give voltage, as at the same time, the corresponding signal is passed and confronted with the signal transmitted by twilight sensor 8. Synchronization of these impulses is carried out by microprocessor controller 4.

Switching to the power supply from external power supply network takes place immediately, if during the day battery 3 is not charged sufficiently.

Microprocessor controller 4 (i.e. the one represented by a power supply controller 4a and fixture controller 4b) also powered by battery 3 or the external power supply network, continuously controls, processes and sends signals resulting from the synchronization of information:
- from the photosensitive twilight sensor 8, namely, the underlying message about the necessity to activate LED panels with LEDs 5,
- about the battery 3 charging level, when a signal is recorded that the battery charging level is too low, then microprocessor 4 switches the lighting fixture to supply power to LEDs 5 from external power supply network,
- about the operation of LEDs 5 which are placed on the printed circuit board in the fixture ("*shine*" or "*do not shine*"), this information is confronted with subsequent messages,
- about the voltage of photovoltaic panel 2 basing on which microprocessor controller 4 reads, whether the LED 5 panel is not damaged, and if so, then by radio or by wire sends information about the need of manual intervention and the need to repair the device to the centre,
- with the signal from motion sensor 6 that activates or at least intensifies the luminous flux.

Any, known for the state of the art (or individually designed for the needs of the control system integrated with a solar lighting fixture) microprocessor controller 4 shall be selected so that it monitors the operation of the lighting fixture (by reading the signal: ("*shine*" or "*do not shine*"), and in accordance with the implemented program turning it on or off, activates the appropriate power source (from the battery or the external power supply network).

Microprocessor controller 4 continuously checks whether during the switching operation of the power supply, the lighting fixture did not go out.

If so, then switch 7 turns the lighting fixture using the external power supply network.

The collected signals are sent by wireless or wire means to the position at the information reception centre, where all the information received and transmitted by the microprocessor controller 4 is read and recorded in a programmable digital computer's RAM.

"*Do not shine*" information about LEDs 5, and hence about the condition of the solar lighting fixture in conjunction with reading the *"shine"* command will start an alarm signal.

The described solution is not restricted by currently applied values of voltage and it can successfully work with other values assuming an appropriate selection of all elements of the lighting fixture.

### List of elements:

- 1-: lamp post,
- 2-: photovoltaic panel (charging board called "PV"),
- 3-: battery,
- 4-: microprocessor controller including:
4a- power supply controller,
4b- fixture controller,
- 5-: LED,
- 6-: motion sensor,
- 7-: switch,
- 8-: twilight sensor.

## Claims

1. Control system integrated with a solar lighting fixture consisting of two power sources and containing at least one photovoltaic panel and at least one, attached to the bottom of the photovoltaic panel, connected to the LED power supply unit, printed circuit panel with LEDs, in which the LEDs are activated and deactivated with a signal transmitted by the microprocessor controller receiving signals from the elements of the system and sending signals to those elements, wherein one of the power sources of solar lighting fixture constitutes at least one battery, and the control system receives signals from at least one sensor that is the twilight sensor positioned in the solar lighting fixture, **characterized in that** the power supply of LEDs (5) is supplied to them from battery (3) charged by photovoltaic panel (2) or by an external power supply network, always using the switch (7) controlled by the control system which is embedded inside the solar lighting fixture body, which controls, processes and sends signals resulting from synchronization of information, in the form of a microprocessor controller (4) responsive to signals received from all elements of the system and controlling the power system.

2. Control system integrated with a solar lighting fixture, according to claim 1, **characterized in that** the microprocessor controller (4) has two dedicated controllers, namely, the power supply controller (4a) and the fixture controller (4b).

3. Control system integrated with a solar lighting fixture, according to claims 1 or 2, **characterized in that** the motion sensor (6) is plugged into the panel with LEDs (5) by means of a microprocessor controller (4).

4. The control system integrated with a solar lighting fixture, according to claims 1 or 2 or 3, **characterized in that** the battery (3) is placed under the lighting fixture.

5. The control system integrated with the solar lighting fixture, according to claims 1 or 2 or 3, **characterized in that** the battery (3) is placed inside the lighting fixture under the photovoltaic panel.
